# EUROPÄISCHE PATENTSCHRIFT

(11) **EP 4 382 953 B1**
(45) Veröffentlichungstag und Bekanntmachung des Hinweises auf die Patenterteilung: **29.01.2025**
(21) Anmeldenummer: 23208651.2
(22) Anmeldetag: 08.11.2023
(51) Int. Cl.: G01S 7/48, G01S 7/497, G01S 17/42

(54) **OPTOELEKTRONISCHER SENSOR UND VERFAHREN ZUR ERFASSUNG UND ABSTANDSBESTIMMUNG VON OBJEKTEN**
OPTOELECTRONIC SENSOR AND METHOD FOR DETECTING AND DETERMINING THE DISTANCE OF OBJECTS
CAPTEUR OPTOÉLECTRONIQUE ET PROCÉDÉ DE DÉTECTION ET DE DÉTERMINATION DE DISTANCE D'OBJETS

(30) Priorität: 06.12.2022 DE 102022132310
(43) Veröffentlichungstag der Anmeldung: 12.06.2024
(73) Patentinhaber: SICK AG, 79183 Waldkirch (DE)
(72) Erfinder: Stein, Patrick, 79189 Bad Krozingen (DE); Fillhardt, Christiane, 77746 Schutterwald (DE); Hammes, Markus, 79117 Freiburg (DE); Krämer, Joachim, 79189 Bad Krozingen (DE); Breindl, Michael, 78120 Furtwangen (DE)

(56) Entgegenhaltungen:
- EP-A1- 3 435 117
- EP-A1- 3 588 139
- DE-B3- 102012 112 987
- US-A1- 2021 223 374

## Beschreibung

Die Erfindung betrifft einen optoelektronischen Sensor und ein Verfahren zur Erfassung und Abstandsbestimmung von Objekten in einem Überwachungsbereich nach dem Oberbegriff von Anspruch 1 beziehungsweise 14.

Ein abstandsmessender optoelektronischer Sensor sendet einen Lichtstrahl in den Überwachungsbereich aus, und der von Objekten zurückgeworfene Lichtstrahl wird wieder empfangen, um das Empfangssignal elektronisch auszuwerten. Der Abstand eines angetasteten Objekts wird aus der Lichtlaufzeit des ausgesandten und wieder empfangenen Lichtstrahls bestimmt. In einem Laserscanner wird dieses Messprinzip für eine Flächenabtastung benutzt. Der Lichtstrahl überstreicht mit Hilfe einer Ablenkeinheit periodisch den Überwachungsbereich. Der jeweils gemessene Abstand wird einer Winkellage der Ablenkeinheit zugeordnet, und damit ist der Ort eines Objektes in dem Überwachungsbereich in zweidimensionalen Polarkoordinaten erfasst. Die dritte Raumkoordinate kann durch eine Relativbewegung in Querrichtung abgedeckt werden.

Laserscanner werden in der Sicherheitstechnik zur Überwachung einer Gefahrenquelle eingesetzt, wie sie beispielsweise eine gefährliche Maschine darstellt. Ein derartiger Sicherheitslaserscanner ist aus der DE 43 40 756 A1 bekannt. Dabei wird ein Schutzfeld überwacht, das während des Betriebs der Maschine vom Bedienpersonal nicht betreten werden darf. Erkennt der Laserscanner einen unzulässigen Schutzfeldeingriff, etwa ein Bein einer Bedienperson, so löst er einen Nothalt der Maschine aus. In der Sicherheitstechnik eingesetzte Sensoren müssen besonders zuverlässig arbeiten und deshalb hohe Sicherheitsanforderungen erfüllen, beispielsweise die Norm EN13849 für Maschinensicherheit und die Gerätenorm EN61496 für berührungslos wirkende Schutzeinrichtungen (BWS). Zur Erfüllung dieser Sicherheitsnormen sind eine Reihe von Maßnahmen zu treffen, wie beispielsweise sichere elektronische Auswertung durch redundante, diversitäre Elektronik, Funktionsüberwachung oder speziell Überwachung der Verschmutzung optischer Bauteile, insbesondere einer Frontscheibe, und/oder Vorsehen von einzelnen Testzielen mit definierten Reflexionsgraden, die unter den entsprechenden Scanwinkeln erkannt werden müssen.

Bei einem Einsatz im Außenbereich (Outdoor) stellen die Umwelteinflüsse, insbesondere Nebel, Regen und Schnee, besondere Herausforderungen für die Zuverlässigkeit und den störungsfreien Betrieb dar. Während diese Wettereinflüsse im Innenbereich bestimmungsgemäß ausgeschlossen werden können, sind sie im Außenbereich zwangsläufig vorhanden und nicht kontrollierbar, jedoch sehr relevant für den produktiven Ablauf im Logistik- oder Produktionsumfeld. Eine vollständige Wechselwirkungsfreiheit zwischen dem optoelektronischen Sensor und den Wettereinflüssen ist in aller Regel nicht mit vertretbarem Aufwand möglich.

Besonders nachteilig ist Nebel in sicherheitstechnischer Anwendung, da es Auswirkungen sowohl auf die Verfügbarkeit wie auf die Sicherheit gibt. Die Verfügbarkeit ist beeinträchtigt, weil bei dichtem Nebel das Nebelecho stark genug wird, um den Nebel als sicherheitsrelevantes Objekt zu behandeln. Eine überwachte Maschine muss daher in einen sicheren Zustand überführt werden, obwohl objektiv gar keine Gefahrensituation vorliegt. Sogar sicherheitskritisch kann Nebel in einem mittleren Sichtweitenbereich werden, wobei der Nebel nicht als Objekt erkannt wird, jedoch durch die Nebeldämpfung zu einem potentiellen Detektionsverlust führt. In diesem Fall kann eine Gefahrensituation übersehen werden, und das muss ein sicherer Sensor im Sinne der oben genannten Normen ausschließen. Bisher besteht die Gegenmaßnahme darin, die sichere Reichweite des Sensors herabzusetzen und so eine Energiereserve vorzusehen. Das allerdings hat zur Folge, dass der Sensor auch zu Zeiten ohne Nebel mit verringerter Reichweite arbeitet.

Es besteht daher ein Bedarf an einer sicheren Nebelerkennung für einen optoelektronischen Sensor. Dabei bedeutet sicher wie überall in dieser Beschreibung, dass einschlägige Sicherheitsnormen für Maschinensicherheit, Personenschutz beziehungsweise berührungslos wirkende Schutzeinrichtungen eingehalten sind.

Die Firma SICK bietet ein "Dynamic Weather Assist" an, das empfindliche Warnfelder nutzt, um widrige Wetterbedingungen zu erkennen und dann auf robustere Schutzfelder umzuschalten, die zumindest noch einen verlangsamten Weiterbetrieb ermöglichen und so insgesamt die Produktivität erhöhen. Eine sichere Nebelerkennung findet dabei nicht statt.

Das Whitepaper von Thorsten Theilig "HDDM+ - Innovative Technologie von SICK für die Distanzmessung" stellt eine optische Distanzmesstechnik vor, bei der mehrere Laserpulse statistisch ausgewertet werden. Durch seine Multi-Echo-Fähigkeit besteht die Möglichkeit, jeweils nur das letzte Echo auszuwerten und vorangehende kleinere Echos zu ignorieren, die durch Nebel verursacht sind. Eine sichere Nebelerkennung ist dies jedoch nicht.

In der DE 10 2009 057 104 A1 unterscheidet ein Laserscanner aufgrund der Form der Empfangspulse, ob ein Objekt oder nur ein Störer als sogenanntes weiches Ziel angetastet wurde. Diese Erkennung ist nicht sicher. Es lässt sich zudem nicht entscheiden, ob der Laserscanner noch detektionsfähig ist, sich also beispielsweise weitere relevante Ziele im Nebel verbergen.

In der EP 2 541 273 B1 wird das Empfangssignal an einem Splitterelement in zwei Pfade für einen hoch- und einen niederfrequenten Anteil geteilt. Mittels des hochfrequenten Anteils werden harte Ziele oder Objekte detektiert, während der niederfrequente Anteil zur Bestimmung einer Sichttrübung genutzt wird. Das erfordert einen doppelten Auswertungspfad, der schon im analogen Teil der Auswertung beginnt. Eine sichere Nebelerkennung bietet die Auswertung im niederfrequenten Anteil nicht.

Die EP 3 059 608 B1 beschreibt einen Laserscanner, der den Empfangspegel über den Strom in der Spannungsversorgung des Lichtempfängers misst und daraufhin den gemessenen Abstand korrigiert oder den Auswertungsalgorithmus anpasst. Dabei kann durch Vergleich des Empfangspegels mit einer Schwelle erkannt werden, ob ein Reflektor angetastet wurde. Einen Zusammenhang mit einer Nebelerkennung gibt es nicht.

In der EP 3 287 809 A1 überwacht ein Laserscanner eine Vielzahl von Überwachungsfeldern innerhalb eines Schutzfeldes und zählt, wie oft darin Objekte detektiert werden. Aus dieser Häufigkeit wird ein Detektionssicherheitsmaß abgeleitet, und bei geringer Detektionssicherheit erfolgt die weitere Überwachung genauer und deshalb mit erhöhter Ansprechzeit, die wiederum durch reduzierte Arbeits- und Bewegungsgeschwindigkeiten einer überwachten Maschine beziehungsweise eines Fahrzeugs kompensiert wird. Insbesondere bei moderatem Nebel steigt aber die Zahl der detektierten Objekte gar nicht an, vielmehr werden wegen der Dämpfung sogar Objekte übersehen.

Die EP 3 435 117 A1 bestimmt anhand einer Verteilung einer Vielzahl von Abstandsmessungen, ob und bis zu welcher Entfernung der dort beschriebene Laserscanner noch detektionsfähig ist. Die statistische Herangehensweise ist vergleichsweise träge, vor allem wenn Aussagen über Nebeleinflüsse in bestimmten Richtungen gesucht werden.

Aus der EP 3 588 139 A1 ist ein weiterer Laserscanner bekannt, der Objektabstände zweifach mit unterschiedlicher Empfindlichkeit misst. Ergeben sich Abweichungen, so wird auf eine Einschränkung der Sichtweite geschlossen. Das funktioniert nur, während ein Objekt im Scanstrahl vorhanden ist und angetastet wird. Der sicherheitskritische Fall eines übersehenen Objekts bei Nebel mit mittlerer Sichttrübung ist damit gerade nicht abgedeckt.

Die DE 10 2012 112 987 B3 befasst sich mit einem Laserscanner, der sein Empfangssignal abtastet und den zeitlichen Verlauf sowohl für die Bestimmung des Abstands eines Objekts mit einem Lichtlaufzeitverfahren als auch eines Sichttrübungsmaßes auswertet.

Aus der US 2021/223374 A1 ist ein Verschmutzungsdetektor für die Frontscheibe eines LIDAR-Sensors bekannt. Die Schmutzerkennung schlägt an, wenn eine extrem kurze Lichtlaufzeit nur entsprechend dem internen Lichtweg bis zu der Frontscheibe gemessen wird. Zusätzlich kann die Amplitude eines entsprechenden internen Frontscheibenreflexes ausgewertet werden.

Vor diesem Hintergrund ist Aufgabe der Erfindung, die Nebelerkennung eines gattungsgemäßen Sensors weiter zu verbessern.

Diese Aufgabe wird durch einen optoelektronischen Sensor und ein Verfahren zur Erfassung und Abstandsbestimmung von Objekten in einem Überwachungsbereich nach Anspruch 1 beziehungsweise 14 gelöst. Um einen Abstand mit einem Lichtlaufzeitverfahren zu messen, wird von einem Lichtsender mindestens ein Sendepuls in den Überwachungsbereich ausgesandt. Ein Lichtempfänger erzeugt ein Empfangssignal aus Licht des Überwachungsbereichs, das einen Empfangspuls aufweist, wenn der Sendepuls im Überwachungsbereich reflektiert oder remittiert wird. Dabei ist eine bewegliche, insbesondere drehbare Ablenkeinheit vorgesehen, mit deren Hilfe der Sendepuls in eine von mehreren Winkelpositionen ausgesandt wird. Vorzugsweise wird so zumindest ein Abschnitt einer Scan- oder Überwachungsebene periodisch abgetastet. Die Ablenkeinheit kann beispielsweise als Drehspiegel, als rotierender Optikkopf mit Lichtsender und Lichtempfänger oder als Solid-State-Einheit beispielsweise auf Basis von MEMS-Spiegeln (Micro-Electro-Mechanical Systems) oder einem OPA (Optical Phased Array) ausgebildet sein.

Eine Steuer- und Auswertungseinheit wertet das Empfangssignal aus, um die Lichtlaufzeit zwischen Aussenden des Sendepulses und Empfangen des Empfangspulses und damit einen Abstand zu bestimmen. Sie erkennt ferner in einer noch zu beschreibenden Weise aus dem Empfangssignal das Vorliegen von Nebel. Damit wird der Sensor im Außenbereich einsatzfähig (Outdoor). Die Erkennung ist auf Nebel ausgerichtet, springt aber gegebenenfalls auch auf andere Umwelteinflüsse wie Regen oder Schnee an, insbesondere mit feinen Tröpfchen und dadurch nebelähnlichen Eigenschaften. Das hat vergleichbare Auswirkungen auf die Detektion und ist daher in der Regel ein gewünschter Effekt, der aber nicht mehr gesondert diskutiert wird.

Die Erfindung geht von dem Grundgedanken aus, das Vorliegen von Nebel durch Prüfen des Empfangssignals mit einer Nebelsignatur zu erkennen. Die Nebelsignatur entspricht Vorwissen über Eigenschaften des Empfangspulses im Falle von Nebel und betrifft damit den Zeitabschnitt des Empfangssignals, in dem sich der Empfangspuls findet. Dass es einen solchen Zeitabschnitt überhaupt gibt, stellt schon eine implizite Bedingung, es wird damit nämlich ein Abstandswert messbar. Allerdings sieht dieser Zeitabschnitt bei Nebel unterscheidbar anders aus als ohne Nebel. Es ergibt sich eine andere zeitliche Verteilung, ein anderes Flanken- und insbesondere Anstiegsverhalten und/oder eine andere Amplitude des Empfangssignals als im Falle eines Empfangspulses von einem Objekt. Diese Unterschiede werden in der Nebelsignatur zusammengefasst. Im Folgenden werden durch Nebel erzeugte Empfangspulse auch als Halbtreffer bezeichnet, im Gegensatz zu Volltreffern auf einem Objekt. Ein Halbtreffer bedeutet noch nicht automatisch Nebel, da es beispielsweise Kantentreffer gibt, wo der Sendelichtfleck auf zwei Objekte in unterschiedlichem Abstand fällt und die ebenfalls keine Volltreffer sind. Zudem entstehen Halbtreffer genaugenommen durch Nebel mittlerer Sichtweite. Starker Nebel kann durchaus auch Volltreffer erzeugen, sehr schwacher Nebel wird womöglich wie sonstige Stör- und Rauscheffekte gar nicht registriert. Das interessante Szenario ist Nebel mittlerer Sichtweite, da bei starkem Nebel ohnehin keine sinnvolle Funktion mehr gewährleistet ist und schwacher Nebel ignoriert werden kann.

Die Erfindung hat den Vorteil, dass größere Reichweiten ermöglicht werden, da eine Energiereserve für Nebel nicht mehr vorgehalten werden muss. Es wird damit erst situativ und nicht schon prophylaktisch auf den Nebel reagiert. Starker Nebel ist in den meisten Outdoor-Anwendungen extrem selten und muss nun nicht mehr in allen Energiebetrachtungen berücksichtigt werden. Die Verfügbarkeit wird deutlich gesteigert. Starker Nebel wird direkt als solcher erkannt, eine überwachte Maschine kann dann beispielsweise mit verminderter Geschwindigkeit weiterarbeiten, statt wie herkömmlich die Maschine in ihren sicheren Zustand zu überführen, in der Regel abzuschalten, und auf bessere Sichtbedingungen zu warten. Detektionsverluste bei speziellen Nebelbedingungen sind nicht mehr möglich, da in diesen Fällen die Nebelerkennung ausgelöst wird. Als Reaktion kann beispielsweise auf robustere Schutzfeldkonfigurationen umgeschaltet oder eine Arbeitsgeschwindigkeit reduziert werden, insbesondere die Geschwindigkeit eines überwachten Fahrzeugs.

Die Steuer- und Auswertungseinheit ist bevorzugt dafür ausgebildet, das Vorliegen von Nebel zu erkennen, wenn dies das Prüfen mit der Nebelsignatur für eine Vielzahl von Winkelpositionen ergibt. Für ein kleineres Objekt ist durchaus vorstellbar, dass es nur an einer einzigen Winkelposition erfasst wird. Nebel ist aber typischerweise großflächig. Daher ist bei Nebel zu erwarten, dass die durch die Nebelsignatur angegebenen Kriterien für Nebel an einer Vielzahl von Winkelpositionen vorliegen. In der Nomenklatur von Halbtreffern und Volltreffern gibt es vereinfacht gesagt bei Nebel viele und nicht nur vereinzelte Halbtreffer. So wird mit der Nebelsignatur geprüft, ob es eine für Nebel typische Häufung, insbesondere Mindestanzahl von Halbtreffern gibt.

Die Steuer- und Auswertungseinheit ist bevorzugt dafür ausgebildet, das Vorliegen von Nebel zu erkennen, wenn dies das Prüfen mit der Nebelsignatur für mindestens m von n nebeneinanderliegenden Winkelpositionen ergibt. In dieser Ausführungsform wird noch spezieller gefordert, dass Nebel an benachbarten Winkelpositionen erkannt wird. Die Häufung von Halbtreffern wird nun nicht irgendwo über den Überwachungsbereich verteilt, sondern speziell in einem Cluster gefordert. Eine Mindestanzahl von Winkelpositionen mit erkanntem Nebel könnte sich ansonsten fälschlich aus mehreren vereinzelten Winkelpositionen geben, in denen die Nebelsignatur nicht trennscharf genug zwischen Nebel und sonstigen Empfangssignalen unterschieden hat. Dabei ist in der Praxis die Regel wiederum zu scharf, den Nebel anhand der Nebelsignatur in einem Nachbarschaftsbereich für alle Winkelpositionen zu erkennen. Deshalb wird dies auf die Forderung m aus n abgeschwächt, mit m<n natürliche Zahlen beispielsweise im Bereich bis zwanzig, wie m=4...7 aus n=8...12. An den verbleibenden n-m Winkelpositionen der betrachteten n-Nachbarschaft kann das Messergebnis beliebig sein, beispielsweise ein Volltreffer auf einem Objekt, oder es kann dort gar kein Abstand gemessen werden.

Der Sensor weist bevorzugt ein dem Lichtempfänger nachgeordnetes Filter auf, das einen Empfangspuls in eine Schwingung überträgt, wobei die Nebelsignatur eine verringerte Amplitude mindestens einer ersten Schwingung, ein verändertes Vorzeichen der mindestens ersten Schwingung und/oder eine veränderte Anzahl von Schwingungen aufweist. Ein solches Filter kann beispielsweise ein Bandpassfilter sein. Anschaulich gesprochen stößt der Empfangspuls eine Schwingung in dem Filter an, mit der die Energie des Empfangspulses auf die Schwingung verteilt wird. Die Nebelsignatur kann nun Kriterien an die Schwingung stellen, die deutlich mehr Charakteristika bietet als ein einfacher Empfangspuls. Nebel verändert den Signalverlauf in auffälliger Weise im Hinblick auf Eigenschaften wie beispielsweise ein langsames Anschwingen, Invertierungen und Phasensprünge. Dies kann über Reihenfolgen, Abstände und Vorzeichen lokaler Extrema geprüft werden. Extremum bedeutet hier, dass eine betrachtete einzelne Schwingung innerhalb des Signalverlaufs eine Amplitudenschwelle der Nebelsignatur über- beziehungsweise unterschreitet. Insbesondere kann sich die Nebelsignatur dadurch zeigen, dass die erste Schwingung, also das erste Extremum der Schwingung, deutlich weniger ausgeprägt ist als bei einem Objekt, nämlich nur ungefähr halb so stark. Ferner zeigt sich, dass bei Nebel oftmals die erste Schwingung in die andere Richtung schwingt als bei einem Objekt, somit die Nebelsignatur das veränderte Vorzeichen umfassen kann. Die Auswirkungen des Nebels erstrecken sich nicht zwingend nur auf die erste Schwingung, es kann sinnvoll sein, die zweite Schwingung, dritte Schwingung und weitere Schwingungen zu betrachten, wobei spätestens nach der dritten Schwingung die Unterschiede nicht mehr so gut erkennbar sind. Schließlich kann es eine veränderte Anzahl der Schwingungen geben, bis die Schwingung insgesamt abgeklungen ist, und auch das kann Teil der Nebelsignatur werden.

Die Steuer- und Auswertungseinheit ist bevorzugt dafür ausgebildet, je Winkelposition eine Vielzahl von einzelnen Lichtpulsen auszusenden, die wieder empfangenen Lichtpulse jeweils mit nur wenigen Schwellen abzutasten, insbesondere mit einer einzigen Schwelle zu binarisieren, und die Abtastungen zu einem digitalen Empfangssignal zu kumulieren. In dieser Ausführungsform wird mit einem Pulsmittelungsverfahren gearbeitet, das eine Vielzahl von Einzelmessungen mit für sich für ein robustes Signal-RauschVerhältnis zu wenig Energie statistisch auswertet. Für eine sehr einfache Hardware-Umsetzung wird das Empfangssignal jeweils nicht mit größerer Bittiefe digitalisiert, sondern nur mit einer oder ganz wenigen Schwellen abgetastet. Erst durch das Kumulieren einer Vielzahl von Einzelsignalen der Einzelmessungen entsteht ein auswertbares Empfangssignal. Wegen der Ablenkeinheit werden die einzelnen Lichtpulse einer Messung genau genommen nicht in dieselbe Winkelposition ausgesandt, aber in einen engen Winkelsektor, dem eine Winkelposition zugeordnet werden kann.

Die Steuer- und Auswertungseinheit ist erfindungsgemäß dafür ausgebildet, das Vorliegen von Nebel nur zu erkennen, wenn zusätzlich zu der Prüfung mit der Nebelsignatur mindestens ein Zusatzkriterium erfüllt ist, nämlich dass Messwerte jenseits einer Mindestentfernung verschwinden, dass ein gemessener Abstand in einem Nebelabstandsbereich liegt und/oder dass kein Reflektor erkannt ist. Die Erkennung von Nebel auf Basis der Nebelsignatur wird in dieser Ausführungsform als nicht hinreichend zuverlässig angesehen, und deshalb wird mindestens ein Zusatzkriterium hinzugenommen. Dabei sind mehrere Zusatzkriterien konkret genannt, von denen vorzugsweise mehrere in den verschiedenen denkbaren Kombinationen oder die vorzugsweise alle gemeinsam angewandt werden. Eine Gewichtung bei Kombination mehrerer Zusatzkriterien ist denkbar. Das erste Zusatzkriterium betrifft den bei Nebel erwarteten Ausfall von Messwerten bei zu großen Abständen. Der Nebel unterdrückt hier die Signalpegel, so dass fernere Objekte nicht mehr erfasst werden. Das zweite Zusatzkriterium fordert, dass eine Messung bei erfüllter Nebelsignatur einen Abstand in einem Nebelabstandsbereich ergibt. Mit anderen Worten soll nach dem zweiten Zusatzkriterium ein Halbtreffer in einem Mindestabstand und/oder Höchstabstand liegen. Nach dem dritten Zusatzkriterium darf mit der betrachteten Messung kein Reflektor erkannt seir Bevorzugt betrifft ein weiteres Zusatzkriterium die Intensität oder den Pegel des Empfangssignals, der bei Vorliegen von Nebel einer erwarteten Intensität entspricht.

Die Steuer- und Auswertungseinheit ist bevorzugt für eine sichere Nebelerkennung im Sinne einer Sicherheitsnorm für den Personenschutz oder berührungslos wirkende Schutzeinrichtungen ausgebildet, insbesondere durch Prüfen mehrerer oder aller Zusatzkriterien. Die Nebelsignatur insbesondere mit Zusatzkriterien ermöglicht erstmals eine sichere Nebelerkennung im Sinne einschlägiger Sicherheitsnormen. In sicherheitstechnischer Anwendung genügt es nicht, mit einer einigermaßen und womöglich bislang unerreicht hohen Rate Nebel und Objekt voneinander zu unterscheiden. Jeder einzelne Fall, in dem eine Person in einem Schutzfeld fälschlich als Nebel klassifiziert wird, kann zu erheblichen Personenschäden führen und ist daher unbedingt zu vermeiden. Die entsprechenden Anforderungen an Fehlersicherheit sind in den Sicherheitsnormen formuliert, und eine sichere Nebelerkennung nach dieser Ausführungsform erfüllt diese Anforderungen durch mehrere, einander diversitär ergänzende und absichernde Nebelkriterien.

Die Steuer- und Auswertungseinheit ist dafür ausgebildet, als erstes Zusatzkriterium für das Vorliegen von Nebel zu prüfen, ob noch eine erwartete Fernmessungsanzahl von Messwerten jenseits der Mindestentfernung erfasst wird, insbesondere über ein jeweiliges vorgegebenes Zeitintervall. Im Betrieb ohne Nebel werden immer wieder Messwerte aus größerer Distanz erfasst, durchaus auch von jenseits der spezifizierten oder sicheren Reichweite des Sensors. Bei Nebel reichen die Signalpegel aus solchen Entfernungen nicht mehr für eine Distanzmessung aus. Dieses Ausbleiben von großen gemessenen Abständen ist also ein weiteres Anzeichen für Nebel. Die Fernmessungsanzahl, die die Erwartung an die Anzahl solcher großen gemessenen Abstände angibt, kann parametriert werden, oder sie wird automatisch durch statistische Auswertung von Distanzmessungen während des Betriebs ohne Nebel abgeleitet. Da ein kurzzeitiges Ausbleiben von großen Abständen schlicht der aktuellen Szenerie geschuldet sein kann, wird das erste Zusatzkriterium vorzugsweise über ein gewisses Zeitintervall geprüft, das insbesondere eine Vielzahl von Scans umfasst.

Der Nebelabstandsbereich umfasst bevorzugt Abstände bis höchstens 10 m, insbesondere zwischen 0,5 m und 6 m. Der Mindestabstand betrifft nicht den Nebel, sondern soll Signale im extremen Nahbereich, wie sie beispielsweise durch eine Frontscheibe verursacht werden, von Nebel unterscheiden. Sofern solche Verwechslungen durch Zusatzausnahmen ausgeschlossen sind, kann die untere Grenze auch näher oder ganz bei Null liegen. Mit dem genannten Bereich wird der Nebelabstandsbereich für das zweite Zusatzkriterium genauer quantifiziert. Hinreichend dichter Nebel, der eine Abstandsmessung auslöst und deshalb zunächst mit Objekten verwechselt werden könnte, ist typischerweise mit Sichtweiten unter zehn Metern verbunden. Das hängt auch mit den optischen Eigenschaften des Sensors zusammen, derje nach Abstand unterschiedlich empfindlich ist. Die abstandsabhängige Empfindlichkeit wird auch als Signaldynamik bezeichnet, und aus dieser Signaldynamik ergibt sich ein weiter eingeschränkter bevorzugter Nebelabstandsbereich von 0,5 m... 1 m bis 5...10 m, vorzugsweise 0,5 m bis 6 m.

Die Intensität entspricht bevorzugt einer für Nebel erwarteten Intensität, wobei die erwartete Intensität aus der Reflektivität eines schwarzen Testobjekts abgeleitet ist, insbesondere diejenige Intensität ist, die ein Objekt mit einer Reflektivität zwischen 10% und 200% der Reflektivität eines schwarzen Testobjekts erzeugt. Als Maß für die Intensität kann beispielsweise das Integral unter dem Empfangspuls beziehungsweise in Ausführungsformen mit einem entsprechenden Filter unter der gleichgerichteten Schwingung herangezogen werden. Mit diesem weiteren bevorzugten Zusatzkriterium wird eine spezifische Reflektivität des Nebels erwartet. Die Quantifizierung, mit der diese spezifische Reflektivität mit derjenigen von Objekten in Beziehung gesetzt wird, lehnt sich vorzugsweise an die einschlägigen Sicherheitsnormen an, wie die IEC61496-3. Danach muss ein Worst-Case-Szenario berücksichtigt sein, in dem ein schwarzes Testobjekt mit 1,8% Remission immer noch sicher erfasst wird. Im oberen Teil des oben genannten Bereichs von 10%-200%, beispielsweise ab 100%, würde Nebel mindestens so viel Licht zurückwerfen wie das schwarze Testobjekt. Das würde folglich in der Regel sogar als Volltreffer gewertet. Daher ist ein kleinerer Wert von beispielsweise 10%-80% oder 10%-50% noch vorteilhafter, da dies noch stärker auf Nebel hindeutet. Ein zu kleiner Wert unter 10%, womöglich auch schon bei einer höheren Grenze wie 20% oder 30%, deutet auf Nebel mit nur sehr geringen Auswirkungen hin, der nicht unbedingt beachtet werden muss, sofern damit überhaupt noch Halbtreffer erzeugt werden. Daher sind auch Bereiche wie [20%...30%, 50%...80%] denkbar.

Die Steuer- und Auswertungseinheit ist bevorzugt für eine Konsistenzprüfung ausgebildet, in der bei Vorliegen einer für Nebel erwarteten Intensität weniger oder keine Abstände jenseits eines Nebelabstands gemessen werden dürfen. Die Konsistenzprüfung leitet sich aus der nebelspezifischen Reflektivität ab. Denn daraus kann berechnet werden, welcher Anteil des Lichts bei einem Objekt mit gegebenem Abstand noch für die Detektion vorliegen müsste und ab wann aufgrund des Nebels die Dämpfung so stark ist, dass kein Abstand mehr gemessen wird. Die Annahme von Nebel mit einer bestimmten nebelspezifischen Reflektivität korrespondiert also mit einem Nebelabstand, ab dem eine Detektion von Objekten nicht mehr möglich ist. Die Konsistenzprüfung stellt folglich fest, ob entfernte Objekte detektiert sind, die der Annahme widersprechen, ob also Abstände oder noch zu viele Abstände gemessen werden, die bei dem unterstellten Nebel gar nicht mehr gemessen werden könnten und daher der Annahme widersprechen, dass tatsächlich Nebel der gemessenen nebelspezifischen Reflektivität vorliegt.

Die Steuer- und Auswertungseinheit ist dafür ausgebildet, einen Reflektor daran zu erkennen, dass ein Strom in dem Lichtempfänger eine Reflektorschwelle überschreitet, insbesondere durch Messen des Stroms in einer Spannungsversorgung des Lichtempfängers. Damit wird das dritte Zusatzkriterium vorteilhaft weiter ausgestaltet. Allgemein kann ein Reflektor in einem Empfangspuls aufgrund besonders hoher Intensität über einer Reflektorschwelle erkannt werden. Besonders bevorzugt wird hierfür nicht das eigentliche Empfangssignal ausgewertet, sondern eine andere Quelle genutzt, nämlich der Strom in der Spannungsversorgung des Lichtempfängers. Dies ist in der einleitend schon genannten EP 3 059 608 B1 genauer beschrieben, auf die ergänzend verwiesen wird. Die Reflektorschwelle kann eine Abstandsabhängigkeit aufweisen, ein gemessener Abstandswert liegt vor, wenn in einer Messung die Kriterien der Nebelsignatur erfüllt sind, d.h. bei einem Halbtreffer.

Die Steuer- und Auswertungseinheit ist bevorzugt dafür ausgebildet, Nebel erst dann zu erkennen und/oder keinen Nebel mehr zu erkennen, wenn sich dies über mehrere Messungen bestätigt. Die Nebelerkennung erhält auf diese Weise eine Trägheit oder Tiefpassfilterung beziehungsweise Hysterese. Die Entstehung und Auflösung von Nebel ist ein vergleichsweise langsamer Prozess, und dem wird durch die Bestätigung einer Nebelerkennung über mehrere Messungen Rechnung getragen. Wie schon bei Prüfung mit der Nebelsignatur über eine Nachbarschaft von Winkelpositionen ist auch hier ein m-aus-n-Kriterium denkbar, selbstverständlich mit eigenem m und n, dass also beispielsweise von n=200 periodischen Abtastungen mit der Ablenkeinheit (Frames, Scans) m=100 Nebel erkennen müssen, ehe das als Nebelerkennung angesehen wird. Zu der oben schon diskutierten räumlichen Betrachtung, in der geprüft wird, ob es eine Häufung von Halbtreffern insbesondere in einer begrenzten Nachbarschaft gibt, tritt hier eine zeitliche Betrachtung. Damit wird eine langsam veränderliche Häufung über eine Serie einer Vielzahl von Scans berücksichtigt, die für Nebel typisch ist.

Der Sensor ist bevorzugt als sicherer Sensor, insbesondere Sicherheitslaserscanner ausgebildet, der einen sicheren Ausgang (OSSD, Output Signal Switching Device) aufweist und dessen Steuer- und Auswertungseinheit dafür ausgebildet ist, bei Erkennen eines sicherheitsrelevanten Ereignisses in dem Überwachungsbereich ein sicherheitsgerichtetes Signal über den sicheren Ausgang auszugeben. In diesem Fall ist nicht nur die Nebelerkennung sicher im Sinne einschlägiger Sicherheitsnormen, sondern der ganze Sensor. Das sicherheitsgerichtete Signal kann einen Nothalt auslösen, allgemein überführt es eine überwachte Maschine in einen sicheren Zustand. Gerade in mobilen Anwendungen genügt womöglich ein Verlangsamen, beziehungsweise ein Ausweichen kann die geeignetere Maßnahme sein.

Die Steuer- und Auswertungseinheit ist bevorzugt dafür ausgebildet, ein sicherheitsrelevantes Ereignis durch Überwachen von in dem Überwachungsbereich konfigurierten Schutzfeldern zu erkennen und für das Vorliegen von Nebel in Winkelpositionen und/oder Abständen eines Schutzfeldes schärfere Kriterien anzulegen. Die Erkennung eines sicherheitsrelevanten Ereignisses erfolgt hier wie verbreitet durch Schutzfelder, die durch Konfiguration innerhalb des Überwachungsbereichs vorgegeben werden. Vorzugsweise wird für die Erkennung von Nebel an Positionen innerhalb eines Schutzfeldes ein anderes, insbesondere strengeres Kriterium angelegt als außerhalb von Schutzfeldern. Beispielsweise werden hier in n benachbarten Winkelpositionen m Nebelerkennungen anhand der Nebelsignatur gefordert, und m ist in Schutzfeldern größer als außerhalb von Schutzfeldern. Eine andere Möglichkeit ist, dass innerhalb von Schutzfeldern mehr der oben diskutierten Zusatzkriterien gefordert werden, beziehungsweise die Zusatzkriterien sind in sich schärfer gefasst.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Schnittdarstellung einer beispielhaften Ausführungsform eines erfindungsgemäßen Sensors mit Nebelerkennung als Laserscanner;
- Fig. 2: ein beispielhaftes Empfangssignal eines Laserscanners bei angetastetem Objekt unter guten Sichtverhältnissen;
- Fig. 3: ein beispielhaftes Empfangssignal eines Laserscanners bei Nebel; und
- Fig. 4: eine Darstellung von Messpunkten eines Laserscanners, die Volltreffer von Objekten oder Halbtreffer an Nebel sein können, zur weiteren Erläuterung der Nebelerkennung.

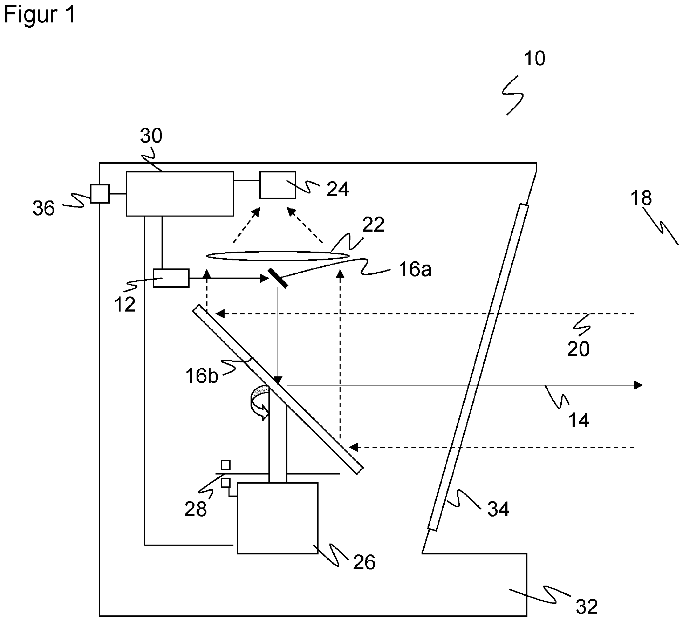

Figur 1 zeigt eine schematische Schnittdarstellung durch einen Laserscanner 10. Ein Lichtsender 12, beispielsweise ein Laser, erzeugt einen Lichtstrahl 14, der vorzugsweise für ein Puls- oder Pulsmittelungsverfahren einen oder mehrere Lichtimpulse aufweist. Der Lichtstrahl 14 wird über Lichtablenkeinheiten 16a-b in einen Überwachungsbereich 18 gelenkt und dort von einem gegebenenfalls vorhandenen Objekt remittiert. Das remittierte Licht 20 gelangt wieder zu dem Laserscanner 10 zurück und wird dort über die Ablenkeinheit 16b und mittels einer Empfangsoptik 22 von einem Lichtempfänger 24 detektiert, beispielsweise einer Photodiode oder APD (Avalanche Photo Diode), und in ein elektrisches Empfangssignal gewandelt.

Die Lichtablenkeinheit 16b ist hier als Drehspiegel ausgestaltet, die durch Antrieb eines Motors 26 kontinuierlich rotiert. Die jeweilige Winkelstellung der Lichtablenkeinheit 16b wird über einen Encoder 28 erfasst. Der von dem Lichtsender 12 erzeugte Lichtstrahl 14 überstreicht somit den durch die Rotationsbewegung erzeugten Überwachungsbereich 18. Aus der jeweiligen Winkelstellung der Ablenkeinheit 16b wird mittels des Encoders 28 auf die Winkellage des angetasteten Objektes in dem Überwachungsbereich 18 geschlossen.

Zusätzlich wird die Lichtlaufzeit zwischen Aussenden des Lichtstrahls 14 und Empfangen des remittierten Lichts 20 nach Reflexion an dem Objekt in dem Überwachungsbereich 18 ermittelt und daraus unter Verwendung der Lichtgeschwindigkeit auf die Entfernung des Objektes von dem Laserscanner 10 geschlossen. Diese Auswertung erfolgt in einer Steuer- und Auswertungseinheit 30, die dafür mit dem Lichtsender 12, dem Lichtempfänger 24, dem Motor 26 und dem Encoder 28 verbunden ist. Es stehen nun über den Winkel und die Entfernung zweidimensionale Polarkoordinaten aller Objekte in dem Überwachungsbereich 18 zur Verfügung. Alle genannten Funktionskomponenten sind in einem Gehäuse 32 angeordnet, das im Bereich des Lichtaus- und Lichteintritts eine Frontscheibe 34 aufweist.

In einer sicherheitstechnischen Anwendung vergleicht die Steuer- und Auswertungseinheit 30 vorzugsweise die Position der erfassten Objekte mit einem oder mehreren Schutzfeldern, deren Geometrie der Steuer- und Auswertungseinheit 30 durch entsprechende Parameter vorgegeben oder konfiguriert ist. Damit erkennt die Steuer- und Auswertungseinheit 30, ob ein Schutzfeld verletzt ist, also ob sich ein unzulässiges Objekt darin befindet, und schaltet je nach Ergebnis einen Sicherheitsausgang 36 (OSSD, Output Signal Switching Device). Dadurch wird beispielsweise ein Nothalt einer angeschlossenen und von dem Laserscanner 10 überwachten Maschine ausgelöst oder ein Fahrzeug abgebremst, auf dem der Laserscanner 10 montiert ist. Ein solcher Laserscanner wird durch Erfüllung der einleitend genannten oder vergleichbaren Normen und die dafür erforderlichen Maßnahmen als Sicherheitslaserscanner ausgebildet.

Es ist denkbar, zumindest einen Teil der Steuer- und Auswertungseinheit 30 außerhalb des Laserscanners 10 zu implementieren. Vorzugsweise ist aber zumindest die gesamte sicherheitsrelevante Auswertung einschließlich der Abstandsmessung und der nachfolgend erläuterten Beurteilung der Sichtweite Teil des Laserscanners 10, der damit autonom messen und die Sicherheit beurteilen kann.

Der anhand der Figur 1 beschriebene Laserscanner 10 dient als Beispiel eines optoelektronischen Sensors, aber die Erfindung ist darauf nicht beschränkt. Es sind insbesondere von Laserscannern unterschiedlichste andere Bauformen bekannt, etwa mit biaxialer statt hier koaxialer Anordnung von Lichtsender 12 und Lichtempfänger 24 oder einem drehenden Messkopf, der Lichtsender 12 und/oder Lichtempfänger 24 umfasst oder durch Lichtleiter angekoppelt ist, sowie mit mehreren Messmodulen oder zusätzlicher Beweglichkeit, um einen dreidimensionalen Raumbereich abzutasten. Eine weitere Alternative sind sogenannte Solid-State-Sensoren, in denen statt der beweglichen Lichtablenkeinheit 16b mikromechanische Systeme wie Mikrospiegel eingesetzt sind oder gewünschte Abtastrichtungen rein durch elektronische Ansteuerung beispielsweise eines optical phased arrays oder akusto-optischem Modulators erreicht werden.

Der Laserscanner 10 ist auch unter Umgebungsbedingungen mit eingeschränkter Sicht und insbesondere im Nebel als Sicherheitslaserscanner einsetzbar, also outdoorfähig beziehungsweise robust gegenüber verunreinigten Umgebungen. Dafür ist der Laserscanner 10 mit einer Funktion zur sicheren Erkennung beziehungsweise Warnung bei Nebel ausgestattet, die im Folgenden näher erläutert wird. Damit kann situativ auf Nebel reagiert werden, etwa die überwachte Maschine abgeschaltet oder lediglich abgebremst beziehungsweise langsamer betrieben werden. Das gilt auch für mobile Anwendungen, insbesondere für den Fall eines Fahrzeugs als überwachte Maschine.

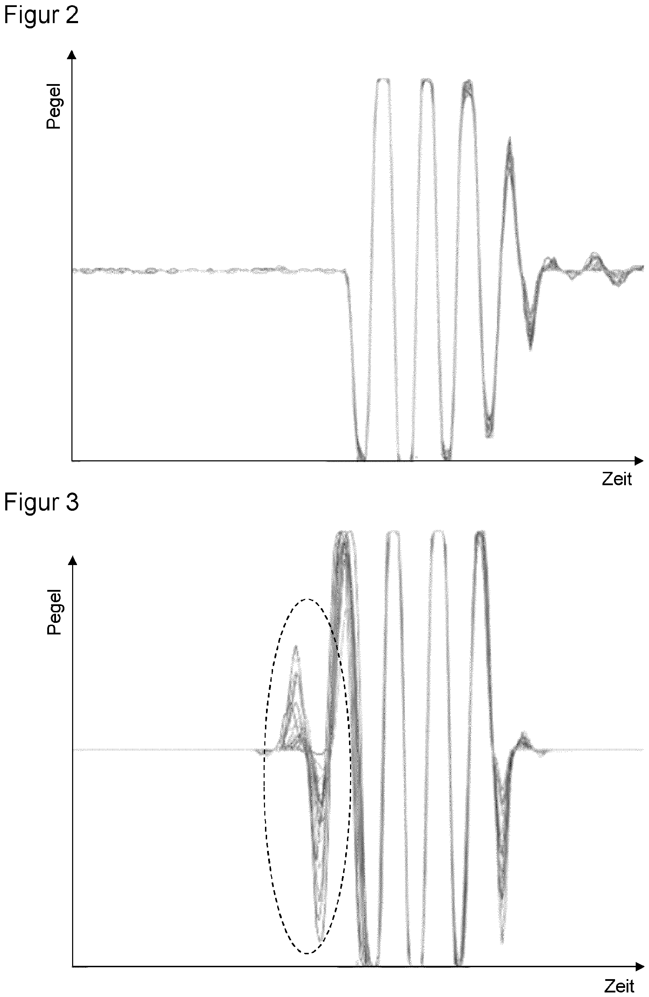

Figur 2 zeigt ein beispielhaftes Empfangssignal eines Laserscanners im Bereich eines Empfangspulses bei einem angetasteten Objekt ohne Nebel beziehungsweise bei guter Sichtweite. Genaugenommen sind mehrere Empfangssignale überlagert, um ein Gefühl für die Schwankungsbreite zu bekommen. Dieses Beispiel ist mit einer Ausführungsform des Laserscanners 10 aufgenommen, bei der im Empfangspfad ein Filter eingesetzt ist, insbesondere ein Bandpassfilter, in dem durch den Empfangspuls eine Schwingung ausgelöst wird. Deshalb ist anstelle eines einfachen Peaks eine Schwingung zu sehen. Der Empfangszeitpunkt kann an einem beliebigen Charakteristikum der Schwingung festgemacht werden, beispielsweise ihrem ersten Nulldurchgang. Ein Zeitversatz des gewählten Charakteristikums innerhalb der Ausdehnung der Schwingung lässt sich durch Kalibrierung ausgleichen.

Figur 3 zeigt ein beispielhaftes Empfangssignal in einer zu Figur 2 vergleichbaren Situation, jedoch nun bei starkem Nebel mit nur 30 m meteorologischer Sichtweite. Der Anfangsbereich ist mit gestrichelter Linie eingekreist. In den ersten Schwingungen, insbesondere den ersten drei Schwingungen oder auch nur bereits der ersten Schwingung ist eine sehr unterscheidungskräftige Nebelsignatur zu erkennen. Einmal sind durch den Nebel die Amplituden der ersten positiven und negativen Schwingung(en) sehr deutlich reduziert. Das liegt unter anderem an der weniger steil ansteigenden Flanke eines von Nebel zurückgeworfenen Empfangspulses, der seine Energie über eine etwas längere Zeit überträgt, die Schwingung nicht ganz so schnell anstößt, oder an Interferenzeffekten. Weiterhin beginnt die Schwingung nun ins Positive statt ins Negative bei deutlich variierender Amplitude. Dieser Vorzeichenwechsel, auch wenn er trotz Nebels nicht in jedem Fall auftritt und noch ein kleines, vernachlässigbares Extremum ins Negative am Anfang der Schwingung vorhanden sein kann, wie in Figur 3 bei genauem Hinsehen zu erkennen, sowie die Varianz sind ebenfalls typisch für Nebel und vergleichbare Sichteinflüsse wie Staub. Dann sind es insgesamt mehr Schwingungen mit Vollausschlag. Alle diese Unterschiede oder Teile davon werden in einer Nebelsignatur zusammengefasst. Mit der Nebelsignatur wird beispielsweise anhand von kombinierten Schwellen, erwarteten Reihenfolgen und Ausprägungen von Merkmalen und dergleichen geprüft, ob in einem Empfangssignal die Situation der Figur 2 für ein angetastetes Objekt ohne Nebel oder die Situation der Figur 3 mit Nebel vorliegt. Für die Prüfung eines Empfangssignals mit einer Nebelsignatur können auch Verfahren des maschinellen Lernens zum Einsatz kommen, beispielsweise tiefe neuronale Netze. Weitere mögliche Auswertungshilfsmittel sind Faltungen, Autokorrelationen oder andere Korrelationen.

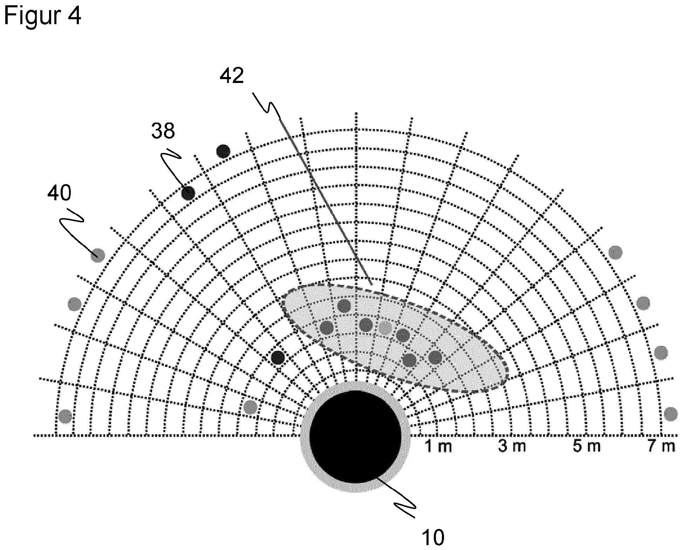

Figur 4 ist eine Darstellung von Messpunkten eines Laserscanners 10. Die Winkelauflösung ist darstellungsbedingt sehr grob, in der Realität wird ein Messpunkt beispielsweise je Grad oder mit noch feinerer Winkelauflösung erfasst. Die Messpunkte können in dunkel dargestellte Halbtreffer 38 und hell dargestellte Volltreffer 40 unterteilt werden. Ein Volltreffer 40 bezeichnet eine valide Abstandsmessung eines angetasteten Objekts. Zu Halbtreffern 38 konnte auch ein Abstandswert gemessen werden. Die zu Figur 3 beschriebene Prüfung mit der Nebelsignatur kam hier jedoch zu dem Ergebnis, dass es sich um eine Messung im Nebel handelt. Neben Halbtreffern 38 und Volltreffern 40 gibt es noch Winkel, zu denen kein Abstandswert bestimmt werden konnte, entweder weil dort weder Objekt noch Nebel vorhanden sind oder weil in der Auswertung kein Empfangspuls zeitlich lokalisiert werden konnte.

Für eine sichere Nebelerkennung mit hohem Sicherheitsniveau ist die Prüfung anhand der Nebelsignatur noch nicht ausreichend verlässlich. Beispielsweise kann ein Halbtreffer 38 auch durch einen Kantentreffer verursacht sein. Deshalb werden vorzugsweise weitere Kriterien geprüft. Diese weiteren Kriterien werden nachfolgend vorgestellt. Bevorzugt sind alle weiteren Kriterien über die Nebelerkennung anhand der Nebelsignatur hinaus gemeinsam erfüllt. Eine solche UND-Verknüpfung ist besonders robust gegenüber falsch positiven Nebelerkennungen. Es sind aber auch Ausführungsformen mit beliebigen Unterkombinationen vorstellbar. Weiterhin ist eine gewichtete Kombination denkbar, wobei jedes Kriterium als Nebelmerkmal behandelt wird und mit seiner individuellen Gewichtung zu einer Bewertungssumme beiträgt. Liegt dann die Bewertungssumme über einer Nebelschwelle, so löst das insgesamt die Nebelerkennung aus.

Ein erstes weiteres Kriterium erweitert das Prüfen auf das Vorliegen der Nebelsignatur in benachbarten Messpunkten 38, 40, wobei in Figur 4 eine solche Nachbarschaft 42 beispielhaft hervorgehoben ist. Es muss also, um dieses weitere Kriterium zu erfüllen, eine Mindestanzahl von benachbarten Halbtreffern geben. Isolierte Halbtreffer genügen nicht für eine robuste Nebelerkennung. Vorzugsweise wird in einer Nachbarschaft von n nebeneinanderliegenden Winkelpositionen nicht gleich für sämtliche n Winkelpositionen ein Halbtreffer gefordert, sondern nur eine Anzahl m<n. In den übrigen n-m Winkelpositionen ist das Messergebnis für das erste Zusatzkriterium ohne Belang, es können dort Volltreffer 40, weitere Halbtreffer 38 oder beispielsweise auch gar keine Messergebnisse vorliegen. Als besonders geeignet hat sich erwiesen, eine Nachbarschaft n von höchstens zwanzig zu verknüpfen, insbesondere ist m=4... 7 aus n=8... 12 eine günstige Wahl.

Zusätzlich zu den auf der Nebelsignatur basierenden Kriterien werden mehrere davon unabhängige Zusatzkriterien angewandt, wobei Unabhängigkeit hier natürlich meint, dass die Prüfung eine eigene ist, eine Korrelation kann gegeben sein beziehungsweise wird unterstellt, da es schließlich immer darum geht, als Gemeinsamkeit das Vorliegen von Nebel zu erkennen. Ein erstes Zusatzkriterium betrifft das Ausbleiben von fernen gemessenen Abstandswerten bei Nebel. Denn im Betrieb ohne Nebel werden immer wieder auch Hintergrundobjekte in größeren Abständen erfasst, die eine Abstandsmessung auslösen. Daraus lässt sich eine Erwartung ableiten, mit welcher Häufigkeit solche größeren Abstände gemessen werden sollten, solange kein Nebel vorliegt.

Wird diese Häufigkeit, die beispielsweise durch eine Fernmessungsanzahl über ein gegebenes Zeitintervall quantifiziert werden kann, nicht mehr erreicht, so ist dies ein Anzeichen für Nebel.

Ein zweites Zusatzkriterium betrifft den gemessenen Abstandswert, der in einem vorgegebenen Nebelabstandsbereich liegen muss. Der Nebelabstandsbereich erstreckt sich beispielsweise von 0,5 m... 1 m bis 5...10 m, vorzugsweise 0,5 m bis 6 m. Vorzugsweise müssen alle m Halbtreffer 38 der Nachbarschaft 42, die für das Nachbarschaftskriterium m aus n herangezogen sind, einen Abstand im Nebelabstandsbereich aufweisen.

Ein weiteres bevorzugtes Zusatzkriterium leitet sich aus einem Maß für die empfangene Energie des Empfangspulses ab, dies ist ein Pegel oder eine Intensität des Empfangspulses. Das entspricht im Großen und Ganzen der integrierten Fläche des Empfangspulses. Im Falle einer Schwingung wie in den Figuren 2 und 3 gehen die negativen Schwingungsanteile positiv in das Integral ein, die Schwingung wird gleichsam vor dem Integrieren gleichgerichtet. Die Intensität kann mit der von Nebel erwarteten Intensität verglichen werden, wobei die Erwartung an den gemessenen Abstandswert angepasst sein kann. Die von Nebel erwartete Intensität hängt mit dessen spezifischer Reflektivität zusammen. Das kann unter Bezugnahme auf ein Minimalobjekt oder schwarzes Testobjekt gemäß einschlägiger Sicherheitsnormen wie der IEC61496-3 quantifiziert werden. Es ist bekannt, welche Intensität dieses Minimalobjekt aus einem jeweiligen Abstand erzeugt. Für die Erfüllung des weiteren Zusatzkriteriums kann die erwartete Intensität von Nebel als ein Anteil der bekannten Intensität von einem Minimalobjekt angesetzt werden. Ein vorteilhafter Bereich hierfür liegt bei 10% bis 200% davon, noch spezieller in einem etwas engeren Intervall wie [20%, 80%], [30%, 80%], [20%, 50%] oder [30%, 50%]. Vorzugsweise müssen alle m Halbtreffer 38 der Nachbarschaft 42, die für das Nachbarschaftskriterium m aus n herangezogen sind, eine für Nebel erwartete Intensität aufweisen.

Ein drittes Zusatzkriterium prüft, ob womöglich ein Reflektor angetastet wurde. Dies lässt sich beispielsweise anhand eines Vergleichs der Intensität mit einer Reflektorschwelle prüfen. Die Reflektorschwelle kann an den gemessenen Abstand angepasst sein. In einem Laserscanner 10 kann eine Reflektorerkennung für andere Zwecke ohnehin implementiert sein, da ein Messpunkt von einem Reflektor in seinem Abstand korrigiert werden sollte beziehungsweise spezieller Auswertungen bedarf. Die Reflektorerkennung kann auf einer Messung des Stroms des Lichtempfängers 24 basieren. Besonders vorteilhaft ist eine Messung in dessen Stromversorgung, wie in der einleitend genannten EP 3 059 608 B1 beschrieben.

Ist Nebel anhand der genannten Kriterien erkannt, insbesondere einer UND-Verknüpfung der Prüfung mit der Nebelsignatur, der m-aus-n-Nachbarschaftsbedingung und mehreren oder allen der vorgestellten Zusatzkriterien, so kann sich noch eine zeitliche Filterung mit Tiefpasseigenschaften anschließen. Bei Laserscannern 10 wird eine periodische Abtastung als ein Scan bezeichnet, dies entspricht in etwa einem Frame einer Kamera. Die bisher beschriebene Nebelerkennung bezieht sich zunächst nur auf einen einzelnen Scan. Nebel ist grundsätzlich ein träges Wetterphänomen und tritt für einen Zeitraum jedenfalls größer als beispielsweise eine Sekunde auf, während ein Laserscanner 10 typischerweise mit einer Scanfrequenz von 50 Hz und mehr arbeitet. Daher kann es sinnvoll sein zu fordern, dass die Nebelerkennung über eine Vielzahl aufeinanderfolgender Scans vorliegt. Ähnlich wie bei der Nachbarschaftsbeziehung von Halbtreffern 38 ist eine gewisse Toleranz von Vorteil, beispielsweise Nebelerkennung in 100 von 200 Scans. Dadurch wird kein unplausibel kurzzeitiger Nebel angezeigt. Auch wird sichergestellt, dass bei vorliegendem, schon erkanntem Nebel und kurzzeitigem Fehlen oder Missdeuten gewisser Nebelmerkmale trotzdem dauerhaft Nebel erkannt bleibt. Umgekehrt ist eine Abklingdauer vorstellbar, die eine frühere Nebelerkennung erst aufhebt, wenn mehrere aufeinanderfolgende Scans, wiederum vorzugsweise mit Toleranz beispielsweise 100 von 200 Scans, die Nebelmerkmale nicht mehr aufweisen. Das ergibt dann insgesamt eine Art Hysterese.

Als Reaktion auf eine Nebelerkennung kann zunächst schlicht die Information als solche ausgegeben werden, dass Nebel vorliegt, beispielsweise mit einem Status-Bit oder Nebel-Flag. Dies kann eine globale Information sein, aber auch an einzelne Messpunkte angehängt werden und somit winkel- beziehungsweise zeitaufgelöst sein. Nebel kann die Umschaltung auf robustere Schutzfelder oder eine entsprechende dynamische Anpassung der Schutzfelder veranlassen. Außerdem kann Nebel zu einer verringerten Geschwindigkeit einer überwachten Maschine, insbesondere der Geschwindigkeit eines Fahrzeugs oder AGVs (selbstfahrendes Fahrzeug) führen. Eine Abschaltung mit Stillstand der Maschine ist nicht länger erforderlich, so dass sich Verfügbarkeit und damit Produktivität erheblich erhöhen. Eine weitere Alternative besteht darin, die gemessenen Abstände wegen des Einflusses von Nebel auf das Empfangssignal zu korrigieren, da ja Nebel die Charakteristika des Empfangspulses verändert, wie in Figur 3 gut zu erkennen.

Dann müssen nicht einmal explizit wegen des Nebels sicherheitsgerichtete Maßnahmen oder Anpassungen vorgenommen werden, der Laserscanner 10 misst einfach nur im Nebel genauer.

## Patentansprüche

1. Optoelektronischer Sensor (10), insbesondere Laserscanner, zur Erfassung und Abstandsbestimmung von Objekten in einem Überwachungsbereich (18), mit einem Lichtsender (12) zum Aussenden eines Sendepulses (14), einer Ablenkeinheit (16b) zum Aussenden des Sendepulses (14) in verschiedene Winkelpositionen, einem Lichtempfänger (24) zum Erzeugen eines Empfangssignals sowie einer Steuer- und Auswertungseinheit (30), die dafür ausgebildet ist, in dem Empfangssignal einen Empfangspuls zu erkennen, den der in dem Überwachungsbereich (18) remittierte oder reflektierte Sendepuls (14, 20) erzeugt, und anhand einer Lichtlaufzeit zwischen Aussenden des Sendepulses (14) und Empfangen des Empfangspulses einen Abstand zu messen sowie durch Auswertung des Empfangssignals das Vorliegen von Nebel durch Prüfen eines dem Empfangspuls entsprechenden Zeitabschnitts des Empfangssignals mit einer Nebelsignatur zu erkennen, wobei die Nebelsignatur eine andere zeitliche Verteilung, ein anderes Anstiegsverhalten und/oder eine andere Amplitude des Empfangssignals als im Falle eines Empfangspulses von einem Objekt aufweist,
**dadurch gekennzeichnet,**
**dass** die Steuer- und Auswertungseinheit (30) dafür ausgebildet ist, das Vorliegen von Nebel nur zu erkennen, wenn zusätzlich zu der Prüfung mit der Nebelsignatur mindestens ein Zusatzkriterium erfüllt ist, nämlich dass Messwerte jenseits einer Mindestentfernung verschwinden, dass ein gemessener Abstand in einem Nebelabstandsbereich liegt und/oder dass kein Reflektor erkannt ist, wobei ein Reflektor in einem Empfangspuls aufgrund einer Intensität über einer Reflektorschwelle oder dem Überschreiten der Reflektorschwelle durch einen Strom in dem Lichtempfänger (24) erkannt wird.

2. Sensor (10) nach Anspruch 1,
wobei die Steuer- und Auswertungseinheit (30) dafür ausgebildet ist, das Vorliegen von Nebel zu erkennen, wenn dies das Prüfen mit der Nebelsignatur für eine Vielzahl von Winkelpositionen ergibt, insbesondere wenn dies das Prüfen mit der Nebelsignatur für mindestens m von n nebeneinanderliegenden Winkelpositionen ergibt.

3. Sensor (10) nach einem der vorhergehenden Ansprüche,
der ein dem Lichtempfänger (24) nachgeordnetes Filter aufweist, das einen Empfangspuls in eine Schwingung überträgt, wobei die Nebelsignatur eine verringerte Amplitude mindestens einer ersten Schwingung, ein verändertes Vorzeichen mindestens der ersten Schwingung und/oder eine veränderte Anzahl von Schwingungen aufweist.

4. Sensor (10) nach einem der vorhergehenden Ansprüche,
wobei die Steuer- und Auswertungseinheit (30) dafür ausgebildet ist, je Winkelposition eine Vielzahl von einzelnen Lichtpulsen (14) auszusenden, die wieder empfangenen Lichtpulse (20) jeweils mit nur wenigen Schwellen abzutasten, insbesondere mit einer einzigen Schwelle zu binarisieren, und die Abtastungen zu einem digitalen Empfangssignal zu kumulieren.

5. Sensor (10) nach einem der vorhergehenden Ansprüche,
wobei die Steuer- und Auswertungseinheit (30) für eine sichere Nebelerkennung im Sinne einer Sicherheitsnorm für den Personenschutz oder berührungslos wirkende Schutzeinrichtungen ausgebildet ist, insbesondere durch Prüfen mehrerer oder aller Zusatzkriterien.

6. Sensor nach einem der vorhergehenden Ansprüche,
wobei die Steuer- und Auswertungseinheit (30) dafür ausgebildet ist, als Zusatzkriterium für das Vorliegen von Nebel zu prüfen, ob noch eine erwartete Fernmessungsanzahl von Messwerten jenseits der Mindestentfernung erfasst wird, insbesondere über ein jeweiliges vorgegebenes Zeitintervall.

7. Sensor (10) nach einem der vorhergehenden Ansprüche,
wobei der Nebelabstandsbereich Abstände bis höchstens 10 m, insbesondere zwischen 0,5 m und 6 m umfasst.

8. Sensor (10) nach einem der vorhergehenden Ansprüche,
wobei als weiteres Zusatzkriterium geprüft wird, ob das Empfangssignal einer für Nebel erwarteten Intensität entspricht, wobei insbesondere die erwartete Intensität aus der Reflektivität eines schwarzen Testobjekts abgeleitet ist, insbesondere diejenige Intensität ist, die ein Objekt mit einer Reflektivität zwischen 10% und 200% der Reflektivität eines schwarzen Testobjekts erzeugt.

9. Sensor (10) nach Anspruch 8,
wobei die Steuer- und Auswertungseinheit (30) für eine Konsistenzprüfung ausgebildet ist, in der bei Vorliegen einer für Nebel erwarteten Intensität weniger oder keine Abstände jenseits eines Nebelabstands gemessen werden dürfen.

10. Sensor (10) nach einem der vorhergehenden Ansprüche,
wobei die Steuer- und Auswertungseinheit (30) dafür ausgebildet ist, den Strom in dem Lichtempfänger (24) durch Messen des Stroms in einer Spannungsversorgung des Lichtempfängers (24) zu erfassen.

11. Sensor (10) nach einem der vorhergehenden Ansprüche,
wobei die Steuer- und Auswertungseinheit (30) dafür ausgebildet ist, Nebel erst dann zu erkennen und/oder keinen Nebel mehr zu erkennen, wenn sich dies über mehrere Messungen bestätigt.

12. Sensor (10) nach einem der vorhergehenden Ansprüche,
wobei der Sensor (10) als sicherer Sensor ausgebildet ist, der einen sicheren Ausgang (36) aufweist und dessen Steuer- und Auswertungseinheit (30) dafür ausgebildet ist, bei Erkennen eines sicherheitsrelevanten Ereignisses in dem Überwachungsbereich (18) ein sicherheitsgerichtetes Signal über den sicheren Ausgang (30) auszugeben.

13. Sensor (10) nach Anspruch 12,
wobei die Steuer- und Auswertungseinheit (30) dafür ausgebildet ist, ein sicherheitsrelevantes Ereignis durch Überwachen von in dem Überwachungsbereich (18) konfigurierten Schutzfeldern zu erkennen und für das Vorliegen von Nebel in Winkelpositionen und/oder Abständen eines Schutzfeldes schärfere Kriterien anzulegen.

14. Verfahren zur Erfassung und Abstandsbestimmung von Objekten in einem Überwachungsbereich (18), wobei ein Lichtpuls (14) in eine von mehreren verschiedenen Winkelpositionen ausgesandt und wieder empfangen wird, um ein Empfangssignal zu erzeugen, in dem ein Empfangspuls erkannt wird, den der in dem Überwachungsbereich (18) remittierte oder reflektierte Lichtpuls (20) erzeugt, und anhand einer Lichtlaufzeit zwischen Aussenden und Empfangen des Lichtpulses (14, 20) ein Abstand gemessen sowie mittels Auswertung des Empfangssignals das Vorliegen von Nebel durch Prüfen eines dem Empfangspuls entsprechenden Zeitabschnitts des Empfangssignals mit einer Nebelsignatur erkannt wird, wobei die Nebelsignatur eine andere zeitliche Verteilung, ein anderes Anstiegsverhalten und/oder eine andere Amplitude des Empfangssignals als im Falle eines Empfangspulses von einem Objekt aufweist,
**dadurch gekennzeichnet,**
**dass** das Vorliegen von Nebel nur erkannt wird, wenn zusätzlich zu der Prüfung mit der Nebelsignatur mindestens ein Zusatzkriterium erfüllt ist, nämlich dass Messwerte jenseits einer Mindestentfernung verschwinden, dass ein gemessener Abstand in einem Nebelabstandsbereich liegt und/oder dass kein Reflektor erkannt ist, wobei ein Reflektor in einem Empfangspuls aufgrund einer Intensität über einer Reflektorschwelle oder dem Überschreiten der Reflektorschwelle durch einen Strom in dem Lichtempfänger (24) erkannt wird.

## Claims

1. An optoelectronic sensor (10), in particular laser scanner, for detecting and determining the distance of objects in a monitoring area (18), comprising a light transmitter (12) for transmitting a transmission pulse (14), a deflection unit (16b) for transmitting the transmission pulse (14) into various angular positions, a light receiver (24) for generating a reception signal, and a control and evaluation unit (30) configured to recognize a received pulse in the received signal that the transmitted pulse (14, 20) remitted or reflected in the monitoring area (18) generates, and measuring a distance on the basis of a light time of flight between transmission of the transmitted pulse (14) and reception of the received pulse, and recognizing the presence of fog by evaluating the received signal by checking a time section of the received signal corresponding to the received pulse with a fog signature, wherein the fog signature comprises a different temporal distribution, a different rise behaviour and/or a different amplitude of the received signal than in the case of a received pulse from an object,
**characterized in that** the control and evaluation unit (30) is configured detect the presence of fog only if at least one additional criterion is fulfilled in addition to the test with the fog signature, namely that measured values beyond a minimum distance disappear, that a measured distance lies within a fog distance range and/or that no reflector is detected, a reflector being detected in a received pulse on the basis of an intensity above a reflector threshold or the exceeding of the reflector threshold by a current in the light receiver (24).

2. The sensor (10) according to claim 1,
wherein the control and evaluation unit (30) is configured to recognize the presence of fog if this results from testing with the fog signature for a plurality of angular positions, in particular if this results from testing with the fog signature for at least m of n adjacent angular positions.

3. The sensor (10) according to any of the preceding claims,
comprising a filter arranged downstream of the light receiver (24) that transforms a received pulse into an oscillation, wherein the fog signature comprises a reduced amplitude of at least a first oscillation, a changed sign of at least the first oscillation and/or a changed number of oscillations.

4. The sensor (10) according to any of the preceding claims,
wherein the control and evaluation unit (30) is configured to transmit a plurality of individual light pulses (14) for each angular position, to scan the light pulses (20) which are received again with only a few thresholds in each case, in particular to binarize them with a single threshold, and to cumulate the scans to form a digital received signal.

5. The sensor (10) according to any of the preceding claims,
wherein the control and evaluation unit (30) is configured for safe fog detection in the sense of a safety standard for personal protection or contactless protective devices, in particular by checking several or all additional criteria.

6. The sensor (10) according to any of the preceding claims,
wherein the control and evaluation unit (30) is configured to check, as an additional criterion for the presence of fog, whether an expected remote measurement number of measured values beyond the minimum distance is still detected, in particular over a respective predetermined time interval.

7. The sensor (10) according to any of the preceding claims,
wherein the fog distance range comprises distances up to at most 10 m, in particular between 0.5 m and 6 m.

8. The sensor (10) according to any of the preceding claims,
wherein as a further additional criterion it is checked whether the received signal corresponds to an intensity expected for fog, wherein in particular the expected intensity is derived from the reflectivity of a black test object, in particular is that intensity which an object with a reflectivity between 10% and 200% of the reflectivity of a black test object produces.

9. The sensor (10) according to claim 8,
wherein the control and evaluation unit (30) is configured for a consistency check in which, in the presence of an intensity expected for fog, fewer or no distances beyond a fog distance may be measured.

10. The sensor (10) according to any of the preceding claims,
wherein the control and evaluation unit (30) is configured to detect the current in the light receiver (24) by measuring the current in a power supply of the light receiver (24).

11. The sensor (10) according to any of the preceding claims,
wherein the control and evaluation unit (30) is configured to detect fog and/or no longer detect fog only when this is confirmed by several measurements.

12. The sensor (10) according to any of the preceding claims,
wherein the sensor (10) is configured as a safe sensor comprising a safe output (36) and whose control and evaluation unit (30) is configured to output a safety-related signal via the safe output (30) when a safety-related event is detected in the monitoring area (18).

13. The sensor (10) according to claim 12,
wherein the control and evaluation unit (30) is configured to recognize a safety-relevant event by monitoring protective fields configured in the monitoring area (18) and to apply stricter criteria for the presence of fog in angular positions and/or distances of a protective field.

14. A method for detecting and determining the distance of objects in a monitoring area (18), wherein a light pulse (14) is transmitted to one of several different angular positions and received again in order to generate a received signal in which a received pulse generated by the light pulse (20) remitted or reflected in the monitoring area (18) is recognized, and a distance is measured on the basis of a light time of flight between transmission and reception of the light pulse (14, 20), and the presence of fog is detected by evaluating the received signal by checking a time segment of the received signal corresponding to the received pulse with a fog signature, the fog signature comprising a different temporal distribution, a different rise behaviour and/or a different amplitude of the received signal than in the case of a received pulse from an object,
**characterized in that** the presence of fog is only detected if, in addition to the test with the fog signature, at least one additional criterion is fulfilled, namely that measured values beyond a minimum distance disappear, that a measured distance lies within a fog distance range and/or that no reflector is detected, a reflector being detected in a received pulse on the basis of an intensity above a reflector threshold or the exceeding of the reflector threshold by a current in the light receiver (24).

## Revendications

1. Capteur optoélectronique (10), en particulier scanner laser, pour détecter et déterminer la distance d'objets dans une zone à surveiller (18), comprenant un émetteur de lumière (12) destiné à émettre une impulsion d'émission (14), une unité de déviation (16b) destinée à émettre l'impulsion d'émission (14) dans différentes positions angulaires, un récepteur de lumière (24) destiné à générer un signal de réception, ainsi qu'une unité de commande et d'évaluation (30) conçue pour reconnaître dans le signal de réception une impulsion de réception que génère l'impulsion d'émission (14, 20) renvoyée ou réfléchie dans la zone à surveiller (18), et pour mesurer une distance à l'aide d'un temps de vol de la lumière entre l'émission de l'impulsion d'émission (14) et la réception de l'impulsion de réception, ainsi que pour reconnaître la présence de brouillard par évaluation du signal de réception en contrôlant un segment temporel du signal de réception qui correspond à l'impulsion de réception et présente une signature de brouillard, la signature de brouillard présentant une autre répartition temporelle, un autre comportement de montée et/ou une autre amplitude du signal de réception que dans le cas d'une impulsion de réception provenant d'un objet,
**caractérisé en ce que**
l'unité de commande et d'évaluation (30) est conçue pour ne reconnaître la présence de brouillard que si, en plus du contrôle basé sur la signature de brouillard, au moins un critère supplémentaire est rempli, à savoir que les valeurs mesurées au-delà d'une distance minimale disparaissent, qu'une distance mesurée se situe dans une plage de distance de brouillard et/ou qu'aucun réflecteur n'est reconnu, sachant qu'un réflecteur est reconnu dans une impulsion de réception en raison d'une intensité supérieure à un seuil de réflecteur ou en raison du dépassement du seuil de réflecteur par un courant électrique dans le récepteur de lumière (24).

2. Capteur (10) selon la revendication 1,
dans lequel l'unité de commande et d'évaluation (30) est conçue pour reconnaître la présence de brouillard lorsque cela résulte du contrôle basé sur la signature de brouillard pour une pluralité de positions angulaires, en particulier lorsque cela résulte du contrôle basé sur la signature de brouillard pour au moins m positions parmi n positions angulaires juxtaposées.

3. Capteur (10) selon l'une des revendications précédentes,
comprenant un filtre placé en aval du récepteur de lumière (24), qui transmet une impulsion de réception en une oscillation, la signature de brouillard présentant une amplitude, réduite, d'au moins une première oscillation, un signe modifié d'au moins la première oscillation et/ou un nombre modifié d'oscillations.

4. Capteur (10) selon l'une des revendications précédentes,
dans lequel l'unité de commande et d'évaluation (30) est conçue pour émettre une pluralité d'impulsions lumineuses individuelles (14) par position angulaire, pour échantillonner les impulsions lumineuses reçues (20) avec seulement quelques seuils respectifs, en particulier pour les binariser avec un seul seuil, et pour cumuler les échantillonnages en un signal de réception numérique.

5. Capteur (10) selon l'une des revendications précédentes,
dans lequel l'unité de commande et d'évaluation (30) est conçue pour une reconnaissance sûre du brouillard dans le cadre d'une norme de sécurité pour la protection des personnes ou des équipements de protection agissant sans contact physique, en particulier en contrôlant plusieurs ou tous les critères supplémentaires.

6. Capteur selon l'une des revendications précédentes,
dans lequel l'unité de commande et d'évaluation (30) est conçue pour vérifier, en tant que critère supplémentaire pour la présence de brouillard, si un nombre attendu de télémesures de valeurs à mesurer au-delà de la distance minimale sera encore détecté, en particulier sur un intervalle de temps respectif prédéfini.

7. Capteur (10) selon l'une des revendications précédentes,
dans lequel la plage de distance de brouillard comprend des distances allant jusqu'à 10 m au maximum, en particulier comprises entre 0,5 m et 6 m.

8. Capteur (10) selon l'une des revendications précédentes,
dans lequel un critère supplémentaire du contrôle est de vérifier si le signal de réception correspond à une intensité attendue pour le brouillard, en particulier, l'intensité attendue étant déviée de la réflectivité d'un objet test noir et étant en particulier l'intensité que génère un objet ayant une réflectivité comprise entre 10 % et 200 % de la réflectivité d'un objet test noir.

9. Capteur (10) selon la revendication 8,
dans lequel l'unité de commande et d'évaluation (30) est conçue pour un contrôle de cohérence dans lequel, en présence d'une intensité attendue pour le brouillard, moins de distances ou aucune distance au-delà d'une distance relative au brouillard peuvent être mesurées.

10. Capteur (10) selon l'une des revendications précédentes,
dans lequel l'unité de commande et d'évaluation (30) est conçue pour détecter le courant électrique dans le récepteur de lumière (24) en mesurant le courant électrique dans une alimentation en tension du récepteur de lumière (24).

11. Capteur (10) selon l'une des revendications précédentes,
dans lequel l'unité de commande et d'évaluation (30) est conçue pour ne reconnaître le brouillard et/ou pour ne plus reconnaître de brouillard que lorsque cela est confirmé sur plusieurs mesures.

12. Capteur (10) selon l'une des revendications précédentes,
dans lequel le capteur (10) est conçu comme un capteur sécurisé qui présente une sortie sécurisée (36) et dont l'unité de commande et d'évaluation (30) est conçue pour émettre un signal orienté sécurité via la sortie sécurisée (30) en cas de reconnaissance d'un événement pertinent en termes de sécurité dans la zone à surveiller (18).

13. Capteur (10) selon la revendication 12,
dans lequel l'unité de commande et d'évaluation (30) est conçue pour reconnaître un événement pertinent en termes de sécurité en surveillant des champs de protection configurés dans la zone à surveiller (18) et pour appliquer des critères plus stricts quant à la présence de brouillard situé dans des positions angulaires et/ou à des distances d'un champ de protection.

14. Procédé de détection et de détermination de la distance d'objets dans une zone à surveiller (18), dans lequel une impulsion lumineuse (14) est émise dans une parmi plusieurs positions angulaires différentes et est reçue, afin de générer un signal de réception dans lequel est reconnue une impulsion de réception que génère l'impulsion lumineuse (20) renvoyée ou réfléchie dans la zone à surveiller (18), et une distance est mesurée à l'aide d'un temps de vol de la lumière entre l'émission et la réception de l'impulsion lumineuse (14, 20), et la présence de brouillard est reconnue par évaluation du signal de réception en contrôlant un segment temporel du signal de réception qui correspond à l'impulsion de réception et qui présente une signature de brouillard, la signature de brouillard présentant une autre répartition temporelle, un autre comportement de montée et/ou une autre amplitude du signal de réception que dans le cas d'une impulsion de réception provenant d'un objet,
**caractérisé en ce que**
la présence de brouillard n'est reconnue que si, en plus du contrôle basé sur la signature de brouillard, au moins un critère supplémentaire est rempli, à savoir que les valeurs mesurées au-delà d'une distance minimale disparaissent, qu'une distance mesurée se situe dans une plage de distance de brouillard et/ou qu'aucun réflecteur n'est reconnu, sachant qu'un réflecteur est reconnu dans une impulsion de réception en raison d'une intensité supérieure à un seuil de réflecteur ou en raison du dépassement du seuil de réflecteur par un courant électrique dans le récepteur de lumière (24).
